# EUROPEAN PATENT SPECIFICATION

(11) **EP 2 149 111 B1**
(45) Date of publication and mention of the grant of the patent: **09.04.2014**
(21) Application number: 08748201.4
(22) Date of filing: 25.04.2008
(51) Int. Cl.: G06Q 10/00, A47F 1/00, B65B 5/00, B65B 7/02, A61J 7/00

(54) **DISTRIBUTION SYSTEM AND METHOD**
VERTEILUNGSSYSTEM UND -VERFAHREN
PROCÉDÉ ET SYSTÈME DE DISTRIBUTION

(30) Priority: 25.04.2007 CA 2585922; 29.01.2008 US 24307
(43) Date of publication of application: 03.02.2010
(73) Proprietor: Planning Technologies International Inc., Trois-Rivières, Québec G8Z 4H1 (CA)
(72) Inventor: FOUCHER, Pierre, Trois-rivières, Québec G8Y 6M9 (CA); CASSIVI, Daniel, Trois-rivières, Québec G8T 5M8 (CA)
(74) Representative: Regimbeau
(86) International application number: PCT/CA2008/000799
(87) International publication number: WO 2008/131548

(56) References cited:
- WO-A2-2006/060448
- US-A- 5 618 252
- US-A- 5 713 487
- US-A1- 2002 103 573
- US-A1- 2003 145 560
- US-A1- 2005 021 173
- US-A1- 2006 136 095
- US-A1- 2006 161 293
- US-B1- 7 182 105

## Description

### CROSS-REFERENCE TO RELATED APPLICATIONS

The present application claims priority on Canadian Patent Application No. 2,585,922, filed on April 25, 2007, and on United States Provisional Patent Application No. 61/024,307, filed on January 29, 2008.

### FIELD OF THE APPLICATION

The present application relates to a dispensing system to distribute given items, and to manage the distribution of the given items, for instance in pouches or bags. The present application pertains to dispensing system used, among numerous applications, in dispensing medication and medical devices and products.

### BACKGROUND OF THE ART

The management of inventory is a complex task, in that many factors are to be considered to minimize the inventory and ensure that products are always available to meet a demand. It is commonly known to have a person manage the distribution and re-stoking to keep control of the inventory.

In the medical or pharmaceutical field, the management of inventory is even more complex considering the additional factors of prescription, posology, expiration date and authorizations, due to the value of medication and pharmaceutical products. Accordingly, the inventory is often managed by personnel, representing an expensive solution.

An example of a pill dispensing system can be found in document US2006/0161293A1.

### SUMMARY OF THE APPLICATION

It is an aim of the present application to provide a novel distribution pouch and bagging apparatus to form the distribution pouch.

Therefore, in accordance with an embodiment of the present application, there is provided a system for dispensing items comprising: trays each adapted to support at least one item to be dispensed; a casing comprising a restocking volume receiving trays with items thereon for subsequent storage, a storage volume for accommodating the trays in storage, an outlet for dispensing any selected one of the items on the trays, and an arm to displace trays at least between the restocking volume and the storage volume, and for displacing items from the trays to the outlet; at least one user interface; and a controller unit for receiving an identification of each item in the trays when positioned in the restocking volume, and for monitoring a position of each identified item within the trays in the casing to control the actuation of the arm to dispense items through the outlet as a function of an order entered through the user interface.

Further in accordance with the embodiment, the trays each have a pair of connectors on opposite edges so as to be manipulated by a grasping tool of the arm.

Still further in accordance with the embodiment, the arm displaces the grasping tool along three translational degrees of freedom.

Still further in accordance with the embodiment, the restocking volume and the storage volume each have shelves facing each other in the casing, and further comprising a transition table in the casing to allow the arm to put down a tray for the grasping tool to switch from one said connector to another said connector on a displaced tray to move said displaced tray between the shelves of the restocking volume to the shelves of the storage volume.

Still further in accordance with the embodiment, the restocking volume and the storage volume each have shelves facing each other in the casing, with the restocking volume being accessed through an front panel of the casing for an operator to restock the casing.

Still further in accordance with the embodiment, the system further comprises a front panel pivotable to provide access to an interior of the casing, with at least one of the user interface being on the front panel.

Still further in accordance with the embodiment, the system further comprises a bagging apparatus at the outlet in the casing, so as to bag items being dispensed through the outlet.

Still further in accordance with the embodiment, the bagging apparatus has a printer for printing on bags information related to the order of the item being dispensed.

Still further in accordance with the embodiment, the bagging apparatus further comprises sealing and cutting apparatuses, to enclose dispensed items in closed pouches.

Still further in accordance with the embodiment, the bagging apparatus comprises a support at the outlet, the support being displaceable vertically in order to support an item being bagged prior to the disposal.

Still further in accordance with the embodiment, the system further comprises a selectively lockable door at the outlet so as to control access to the outlet.

Still further in accordance with the embodiment, optical sensors confirm to the controller unit the dispensing of items for the controller unit to adjust inventory data.

Still further in accordance with the embodiment, the user interface includes at least one of a touch-screen monitor, a bar-code reader, a keyboard.

Still further in accordance with the embodiment, the system further comprises a disposal bin, the disposal bin having a drop opening selectively opened through the controller unit to return items in the system.

Still further in accordance with the embodiment, the system further comprises a bulk dispenser in any one of the trays, the bulk dispenser being actuatable to output at least one item from a bulk container of items.

Still further in accordance with the embodiment, the system further comprises a reader in the casing and readable data on the trays, for the controller unit to confirm an identity of each tray displaced in the casing.

### BRIEF DESCRIPTION OF DRAWINGS

Fig. 1 is a front left-side perspective view of a bagging apparatus in accordance with an embodiment of the present application;
Fig. 2 is a front right-side perspective view of the bagging apparatus of Fig. 1;
Fig. 3 is a rear left-side perspective view of the bagging apparatus of Fig. 1;
Fig. 4 is a perspective view of a printer of the bagging apparatus of Fig. 1;
Fig. 5 is a perspective view of a cutting apparatus of the bagging apparatus of Fig. 1;
Fig. 6 is a perspective view of a chute support of the bagging apparatus of Fig. 1;
Fig. 7 is a sectional view of the bagging apparatus of Fig. 1;
Fig. 8 is a schematic view of a distribution pouch produced by the bagging apparatus of Fig. 1, enclosing a syringe;
Fig. 9 is a schematic view of a distribution pouch produced by the bagging apparatus of Fig. 1, enclosing pills; and
Fig. 10 is a perspective view of a dispensing system in accordance with an embodiment of the present application;
Fig. 11 is a perspective view of the dispensing system of Fig. 10, with an outer shell and front panel removed to show an interior thereof;
Fig. 12 is a side elevation view of the dispensing system of Fig. 10;
Fig. 13 is an exploded view of a bulk dispenser device in accordance with yet another embodiment of the present application;
Fig. 14 is a perspective view of a bulk dispenser device in accordance with yet another embodiment of the present application; and
Fig. 15 is a sectional view of the bulk dispenser device of Fig. 14.

### DESCRIPTION OF PREFERRED EMBODIMENTS

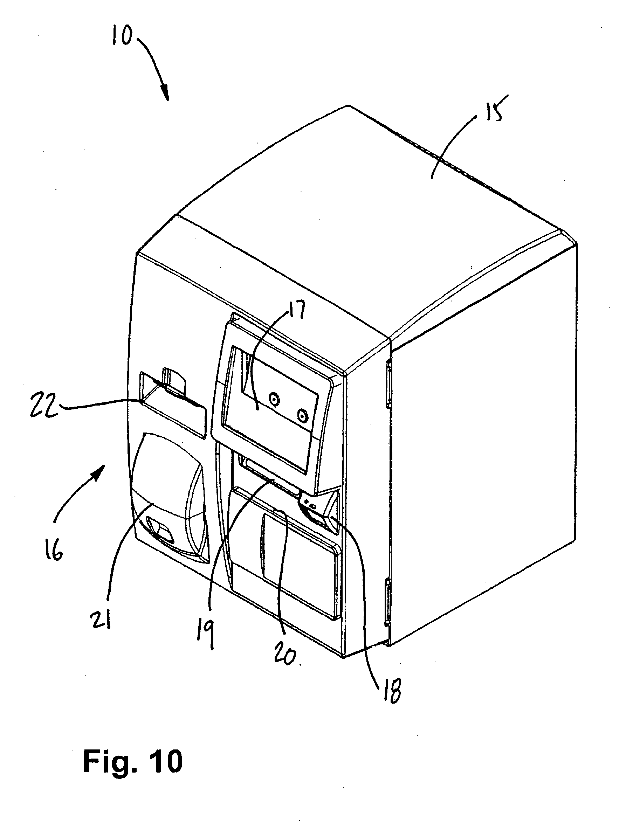

Referring to the drawings, and more particularly to Fig. 10, a dispensing system in accordance with an embodiment of the present application is generally shown at 10. The dispensing system 10 is used to dispense various items while controlling the inventory in view of factors such as inventory level and authorizations. In an embodiment, the dispensing system is used to dispense medication and medical products/devices. For simplicity purposes, the following description will refer to the dispensing of medication and medical products/devices, although the dispensing system 10 could be used in a plurality of other industries to stock and control the inventory of small parts/pieces.

The dispensing system 10 has a casing 15 with a front panel 16 hinged thereto. The casing 15 is made of a sturdy material so as to protect the contents of the dispensing system 10. The front panel 16 encloses the controller unit of the dispensing system 10, and supports the user interface components of a user interface system, by which a user interacts with the dispensing system 10 so as to perform various transactions related to the dispensing of products.

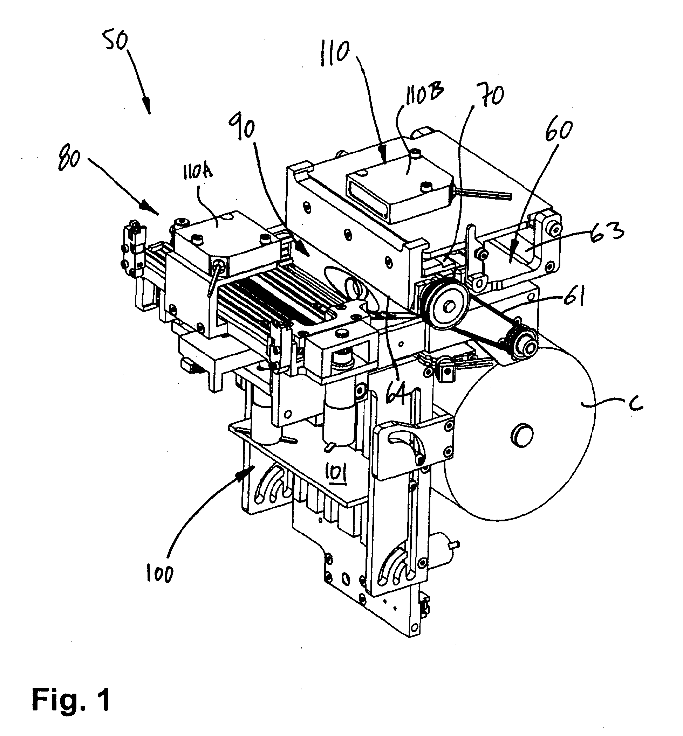

The front panel 16 of Fig. 1 features a monitor 17 by which information is displayed to command the dispensing system 10. Preferably, the monitor 17 is a touch screen, by which the user of the dispensing system 10 can enter information, such as user identification, patient information, authorization codes, product identification for orders and returns, etc. Other alternatives are considered as well, for instance, using a keyboard or other interface tool.

A bar-code reader 18 is also provided in the front panel 16. The bar-code reader 18 may be used in order to authorize a transaction by the scan of an identification card. Moreover, the dispensing system 10 preferably offers the function of recuperating waste, such as used syringes, unused medication, etc. As will be described hereinafter, such products are typically packaged in a pouch having a bar code associated with the product. Accordingly, the bar-code reader 18 is used to record the identification of the product thrown to waste. Alternatives include RFID and other types of sensing technology.

As the dispensing system 10 will accept some waste, a drop opening 19 is provided in the front panel 16. The drop opening 19 typically features a trap or door that is opened once authorization has been granted by the dispensing system 10. The drop opening 19 communicates with a wastebasket or disposal bin within the front panel 16. In order to empty the wastebasket of the dispensing system 10, an access door 20 is provided in the front panel 16. The access door 20 can only be accessed by authorized personnel, whereby a lock is typically provided in the access door 20. Other identification may be required, for instance biometric recognition and the like.

Still referring to Fig. 1, an outlet 21 is provided in the front panel 16 so as to dispense the various products from the dispensing system 10. In an embodiment, the outlet 21 is related to a bagging apparatus within the dispensing system 10. The outlet 21 is preferably lockable, so as to ensure that it will only be opened at the time of a transaction with the dispensing system 10.

A sealing apparatus 22 is provided in the front panel 16. Considering that various items will be returned to the dispensing system 10 in a bag or pouch, the bag/pouch needs to be sealed to protect the contents to be returned. Accordingly, the sealing device 22 is self-service.

Other features may also be provided in the front panel 16. For instance, a fingerprint identifier may be provided for the quick authorization of transactions with the dispensing system 10.

It is observed that the front panel 16 in Fig. 10 has a nonnegligible thickness. The front panel 16 has an inner volume incorporating the controller unit for the interface components of the front panel 16. The controller unit is a processor that controls all movements within the casing and that accounts inventory data. The controller unit is connected to the user interfaces of the system 10, and drives all actuated mechanisms within the casing 15.

It is desired to provide a protective wall between the front panel 16 and an interior of the casing 15, so as to provide a second level of security to prevent unauthorized access to an interior of the casing 15.

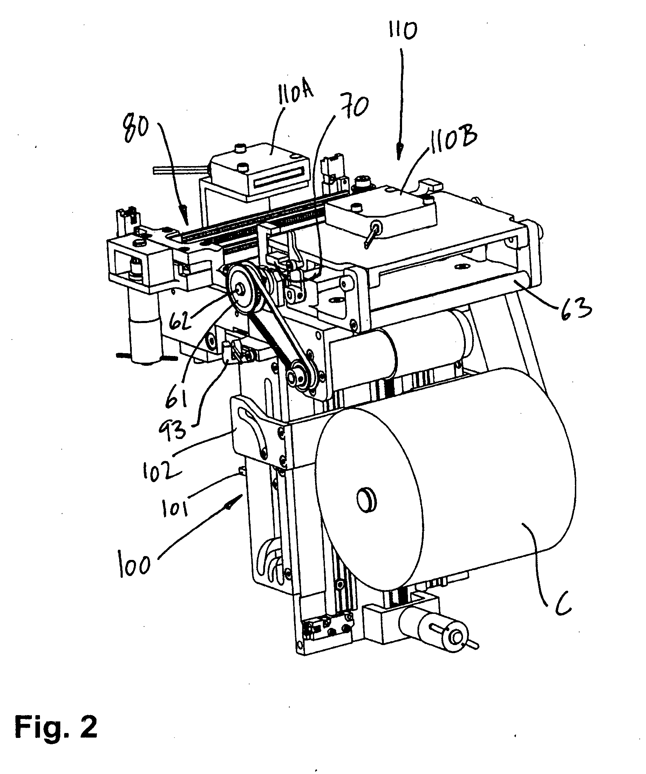

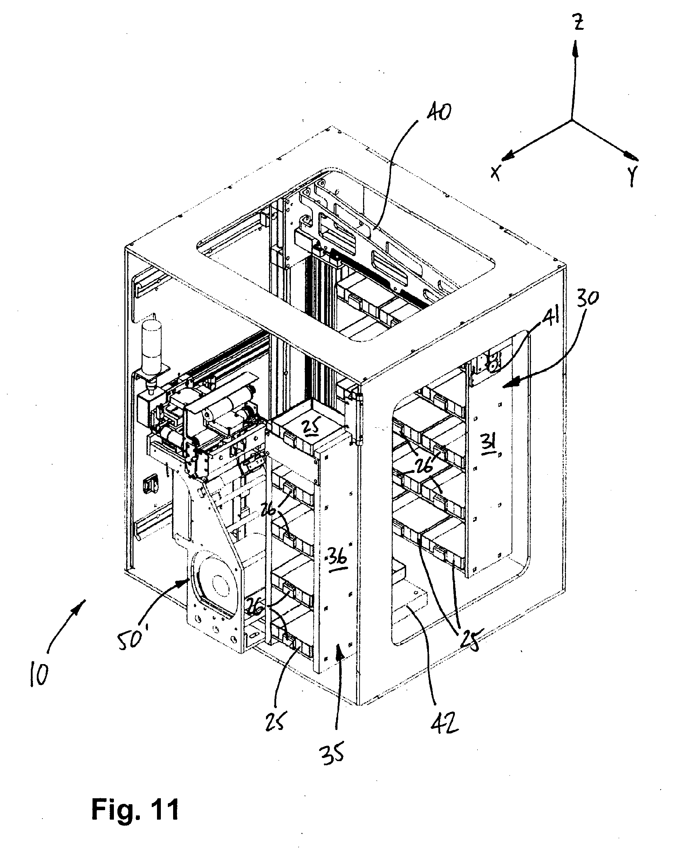

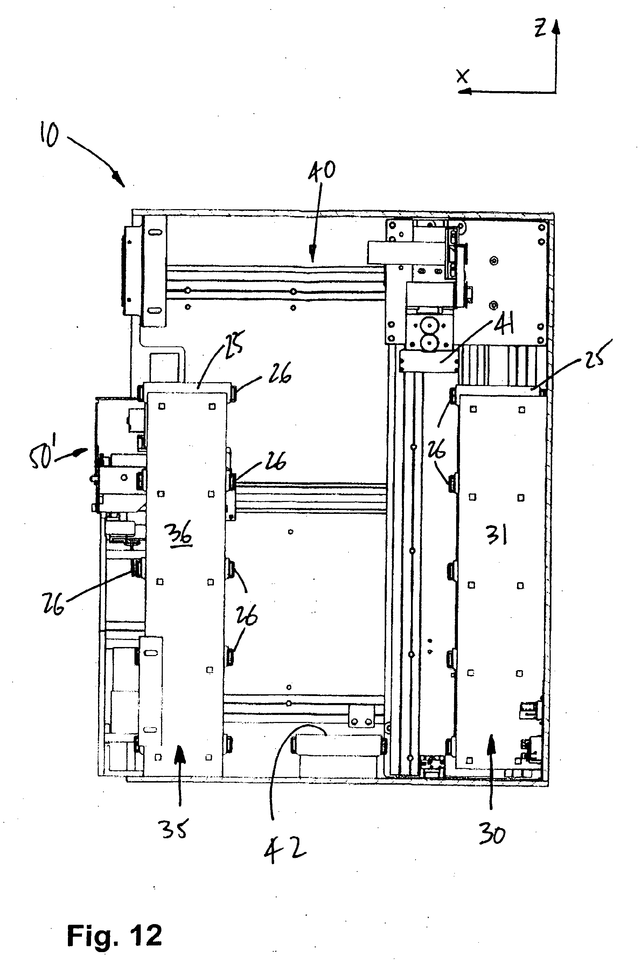

Referring concurrently to Fig. 11 and 12, an interior of the casing 15 is shown. The various products stored in the dispensing system 10 are carried in trays or cassettes 25. Other similar devices can be used as alternatives to the trays/cassettes 25. The cassette 25 is concave so as to support items, and has front and rear connectors or hooks 26 (Fig. 2 for the rear hooks) so as to be manipulated within the casing 15.

A storage volume 30 is provided at a rear end of the casing 15, for the storage of the inventory. In the illustrated embodiment, the storage volume 30 consists of a plurality of shelves 31. The shelves 31 are shown supporting 15 different cassettes 25 although more or less positions could be provided as well, with each cassette position being known by the dispensing system 10.

A restocking volume 35 is provided at a front end of the casing 15. The restocking volume 35 features shelves 36, in which restocked cassettes or empty cassettes are positioned in view of the restocking of the dispensing system 10. In the illustrated embodiment, five different positions are provided for the cassettes 25, although more or less positions could be provided as well.

A robotic arm 40 displaces the cassettes 25 between the storage volume 30, the restocking volume 35 and a bagging apparatus, described hereinafter. In the embodiment of Figs. 11 and 12, the robotic arm 40 is made of linear actuators, allowing cassettes to be displaced along three translational degrees of freedom, namely X, Y and Z. A grasping tool 41 is provided at an end of the robotic arm 40 and is actuatable to grasp the hooks 26 on the cassettes 25 so as to displace within the dispensing system 10. The robotic arm 40 and the grasping tool 41 are driven by the controller unit of the dispensing system 10.

In the illustrated embodiment, the grasping tool 41 accesses cassettes 25 in the shelves 31 of the storage volume 30 by grasping the front-end hook 26. On the other hand, in order to manipulate the cassettes 25 in the shelves 36 of the restocking volume 35, the grasping tool 41 grasps the rear-end hooks 26 of the cassettes 25. Accordingly, a transition table 42 is provided to enable the grasping tool 41 to temporarily put down a cassette to switch from read-end hook 26 to front-end hook 26, for displacing a cassette 25 from the restocking volume 35 to the storage volume 30. Accordingly, the presence of the transition table 42 optimizes the use of the space within the casing 15. It is observed that the presence of the transition table 42 allows the arm 40 to operate without any rotational joint, although rotational joints could also be used to provide a rotational degree of freedom to the grasping tool 41.

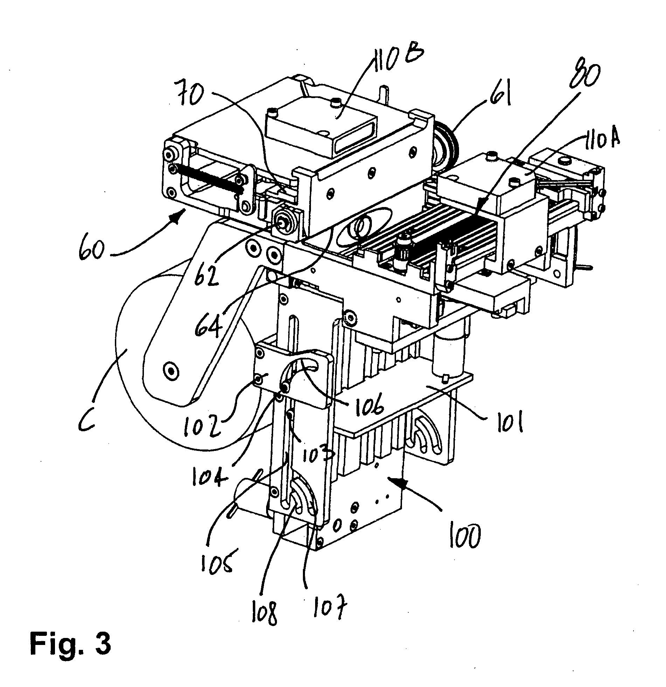

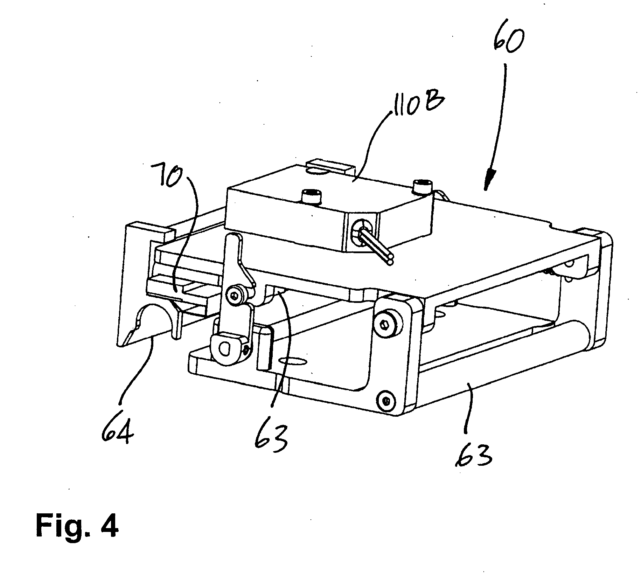

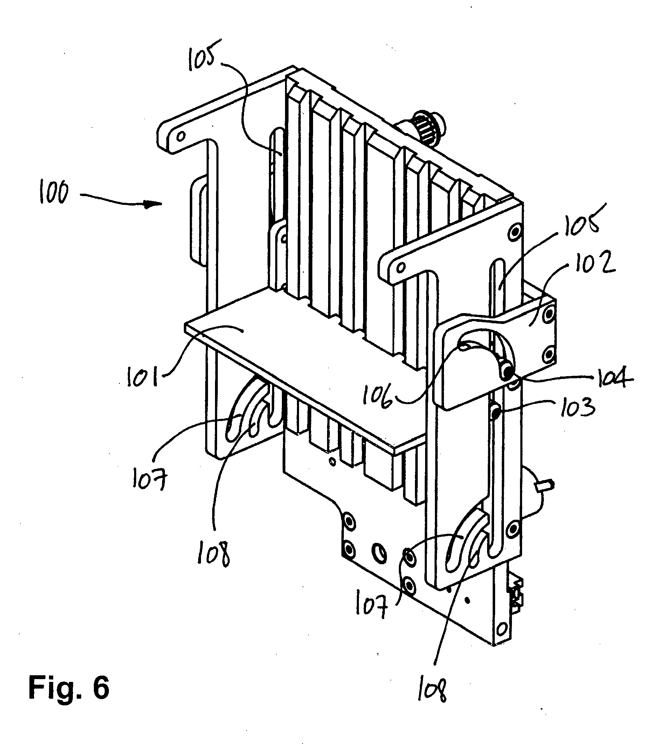

Referring concurrently to Figs. 1 to 7, the bagging apparatus 50 for producing pouches is generally shown in greater detail, and is similar to the bagging apparatus 50' of Fig. 11. The bagging apparatus 50 supports a roll of tube and paper strip, as generally illustrated by C. The bagging apparatus 50 and all its components are driven by the controller unit of the dispensing system 10.

The bagging apparatus 50 features a feeding system 60 to feed the tube to a filling area, and a printer 70 to print data on the pouches. A cutting apparatus 80 is provided to cut and seal the pouches to an appropriate size. A sealing apparatus 90 seals the pouch with its contents. Chute support 100 is provided to support the weight of the contents of the pouches, prior to the pouch being cut and sealed off. An optical detector system 110 is provided to confirm whether items have been deposited into the pouch.

Referring to Figs. 1, 2 and 4, the feeding system 60 has a belt drive 61 by which a roller 62 is driven to dispense a length of tube from the roll C to the filling area of the bagging apparatus 50. Idler rollers 63 are used in combination with the driven roller 62 to provide suitable tension in the tube for its selective feed to the filling area. The tube is fed via the outlet 64, into the filling area of the bagging apparatus 50.

The printer 70 is adjacent to the driven roller 62 and is actuated to print information on the paper strip of the tube, in accordance with the contents of the pouch being formed. The printer 70 is selected as a function of the type of paper being used as paper strip.

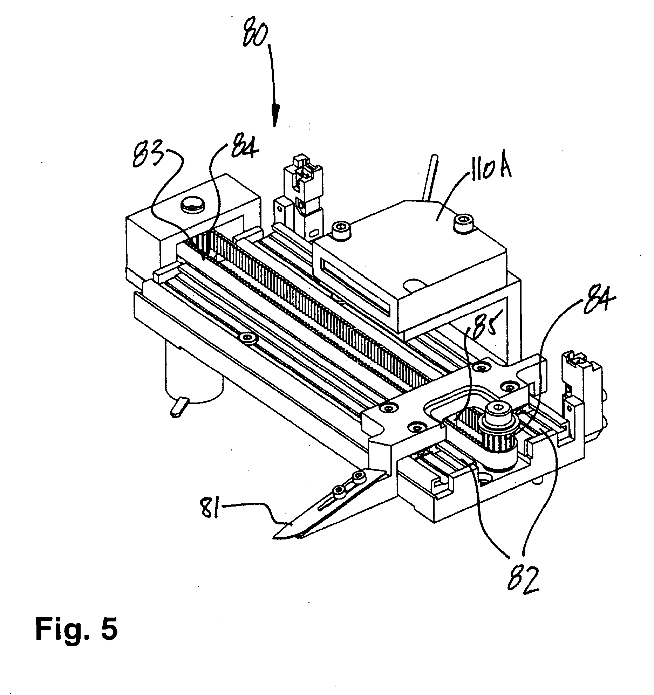

Referring to Fig. 5, the cutting apparatus 80 is positioned at a top end of the filling area of the bagging apparatus 50, and cuts the tube from the roll C to define a selected length of pouch. Moreover, the cutting apparatus 80 holds the open-ended pouch during the dispensing of items in the pouch, and seals the pouch with its contents.

The cutting apparatus 80 has a cutting tool 81 that is mounted to rails 82 so as to translate in the direction indicated by X in Fig. 5. The translation is controlled by way of a timing belt 83 that is actuated by gears 84. The cutting tool 81 comprises a rack 85 that is operatively connected to the timing belt 83 for the transmission of motion from the timing belt 83 to the cutting tool 81.

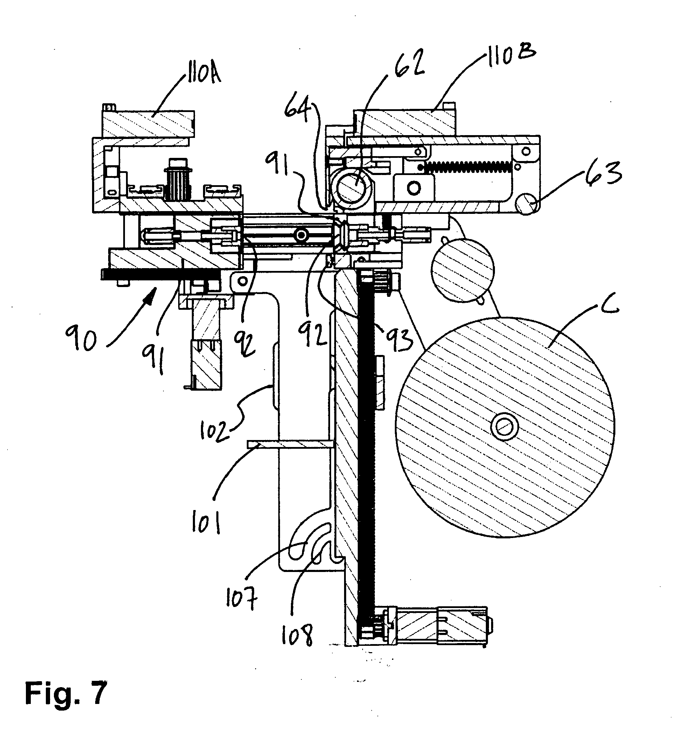

Referring concurrently to Figs. 1 and 7, the sealing apparatus 90 has a pair of jaws 91 facing each other and positioned below the cutting apparatus 80 and the feeding system 60 in the filling area of the bagging apparatus 50. The jaws 91 each have a suction cup 92 that is actuated to grasp the open-ended pouch in the filling area. The jaws 91 are translated toward one another so as to each capture a respective panel of the pouch in the filling area by suction of the suction cups 92. The jaws 91 are then translated away from one another so as to open the pouch, such that items may be dropped into the opened pouch.

Once the item/items have been dispensed into the pouch, the jaws 91 are brought back against one another to close the pouch with its contents. The sealing tool 93, moving with its jaw 91, is then used to seal the pouch shut with its contents. It is pointed out that the other jaw 91 features one anti-adhesive band opposite the sealing tool 93, to prevent melted plastic to adhere to the jaw 91. It is pointed out that the jaw 91 that does not feature the sealing tool 93 preferably translates against the other jaw 91, which other jaw 91 is fixed. However, other combinations are also considered. Moreover, the suction cups 92 present one of numerous alternatives to grasp the pouch. Other devices are considered such as grasping fingers, clips and the like.

Referring concurrently to Figs. 1, 3 and 6, the chute support 100 has a support plate 101. The support plate 101 translates vertically along direction Y. The support plate 101 delimits the bottom end of the filling area, and is positioned vertically as a function of the size of the item to be bagged. More specifically, in order to avoid an item damaging the pouch, the vertical position of the support plate 101 within the filling area is adjusted as a function of the size of the item being dispensed into the pouch.

The chute support 100 has a bracket 102 that is the interface between the actuation means (timing belt and gear assembly) and the support plate 101. Accordingly, the racket 101 translates with the support plate 101. The support plate 101 has first pins 103 and second pins 104 at both ends. The first pins 103 are accommodated in guide slots 105 in the casing of the chute support 100, and move up and down along the guide slots 105.

The second pins 104 are connected to the bracket 101, by being accommodated in biasing slots 106. Accordingly, when the bracket 101 moves downwardly, the biasing slots 106 exert pressure on the second pins 104. When the second pins 104 are aligned with balancing slots 107 in the casing of the chute support 100, the pressure exerted by the biasing slots 106 forces the second pins 104 into the flipping slots 107, and the first pins 103 in the other set of flipping slots 108. This creates a pivoting motion of the support plate 101, to drop the filled pouch out of the chute support 100. Other configurations are considered to perform the vertical motion and pivoting motion of the support plate 101.

Referring to Figs. 1 and 2, an optical detector system 110 optically verifies that the contents have been dispensed into the pouch. The system 100 has an emitter 110A and a receiver 110B, that detect any movement therebetween. The emitter 110A and receiver 110B are sized so as to cover the full width of the pouch. Other types of detection systems may be used, such as weight sensors on the support plate 101, and the like.

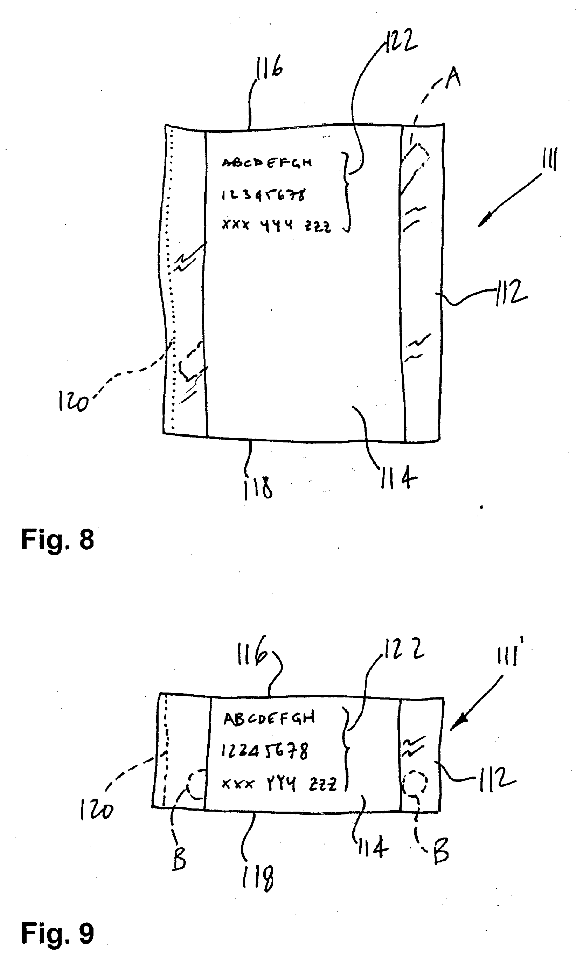

Referring to the drawings and more particularly to Fig. 8, a distribution pouch or bag in accordance with an embodiment of the present application is generally shown at 111, as produced by the bagging apparatus 50.

The distribution pouch 111 is made of a plastic tube 112 supporting a strip of paper 114. The tube 112 is a film folded or sealed on its lateral edges to form the tube. The tube 112 is sealed and cut at the top edge 116 and at the bottom edge 118 to form the pouch 111, during the dispensing of the tube 112 from a bagging apparatus, as will be described hereinafter.

A perforation joint 120 is provided parallel to one of the lateral edges of the distribution pouch 111. The perforation joint 120 is manually torn off to access the contents of the pouch 111, namely a syringe A in the example of Fig. 8.

Data 122 pertaining to the contents of the pouch 111 is printed directly onto the strip of paper 114. The data 122 is preferably printed by the bagging apparatus, whereby the strip of paper 114 is selected so as to be compatible with the printing head of the bagging apparatus. In an example, the strip of paper 114 is thermal paper that adheres to the tube 112. Moreover, the strip of paper 114 and tube 112 are provided in a roll, as will be described hereinafter. It is also considered to produce minute electronics (chips) in the roll C (e.g., in the central tube of the roll C or along the tube 112, which electronics will be required for the tube to be dispensed by the bagging apparatus 50. Accordingly, by such control, the operator of the dispensing system 10 can ensure that only selected types of resins will be used, for instance to avoid contamination of the products that will be dispensed.

In a further example, the pouch 111 is used as part of a medical dispenser. Accordingly, drugs, medication or any like pharmaceutical product of suitable size are distributed in one of the pouches 111. In Fig. 8, the syringe A contains a dose of a pharmaceutical product that is destined for a patient. Therefore, the data 122 typically includes the patient's name, the product identification and dose, the time period at which the dose must be administered to the patient, and the identification of the physician or pharmacist having prescribed the dose. Once the dose has been administered, the pouch 111 may be used as a disposal bag, if the dose came from a dispensing instrument (e.g., a syringe).

Referring to Fig. 9, a distribution pouch 111' is illustrated. The pouch 111' is similar to the pouch 111 of Fig. 8, as it is produced by the same bagging apparatus. However, the pouch 111' contains pills B, whereby the pouch 111' is smaller than the pouch 111.

The following sequence of events is performed to produce the pouches 111/111' with their contents. Once a request for a dose has been entered by appropriate personnel, a controller (e.g., a computer having a processor) displaces the support plate 101 of the chute support 100 to an appropriate height in view of the format of the dose, and activates the printer 70 to print the appropriate data 122 on the output end of tube 112/paper 114 being dispensed from the roll C. The output end is already sealed from a previous operation.

With the information printed on the strip of paper 114, a suitable length of tube 112/paper 114 is dispensed from the roll C, through the actuation of the feeding system 60 by the controller. Once a suitable length has reached the cutting apparatus 80, the tube 112/paper 114 is cut to define the size of the pouch 111. The free end of the roll C is sealed off for subsequent bagging operations, with the sealing apparatus 90.

The top edge 116 of the pouch 111 is maintained open by the sealing apparatus 90. The product is then dispensed through a chute into the open pouch 111, and is partially supported by the support plate 101. The optical detection system 110 ensures that the appropriate dose has been dispensed into the pouch 111/111'. If the appropriate dose is detected, the controller actuates the sealing apparatus 90 to seal the pouch 111/111'. The chute support 100 then lowers the product to a dispensing position.

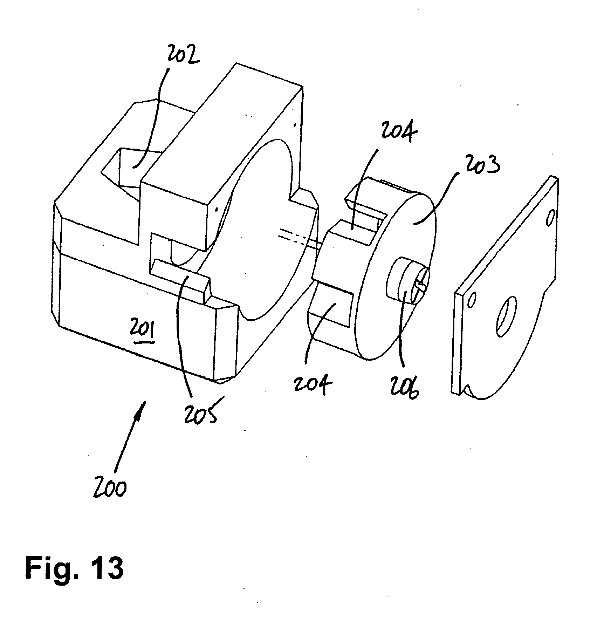

Referring to Fig. 13, a bulk dispenser device is generally shown at 200. The bulk dispenser device 200 is typically placed in one of the cassettes 25, and is used to dispense bulk products, such as medication tablets.

The bulk dispenser device 200 has a base 201, upon which is mounted a recipient (not shown). A trough 202 is defined in the base 201, and is in communication with a bottom of the recipient, such that the bulk tablets of the recipient are guided toward the slotted wheel 203. The wheel 203 has a plurality of slots 204 that are oriented radially on the wheel 203. Each slot 204 is sized so as to receive one single tablet from the recipient. Accordingly, the size of the slots 204 is selected as a function of the tablets that will be dispensed by the bulk dispenser device 200.

An outlet 205 is provided in the side of the base 201 and is aligned with the slots 204. Therefore, upon rotation of the wheel, the slots 204 will align one by one with the outlet 205, so as to provide an exit for the tablets in the slots 204.

A shaft 206 is provided in the center of the wheel 203. The wheel 203 is actuated through the shaft 206, for instance, by way of a rack-and-pinion arrangement, as will be described hereinafter.

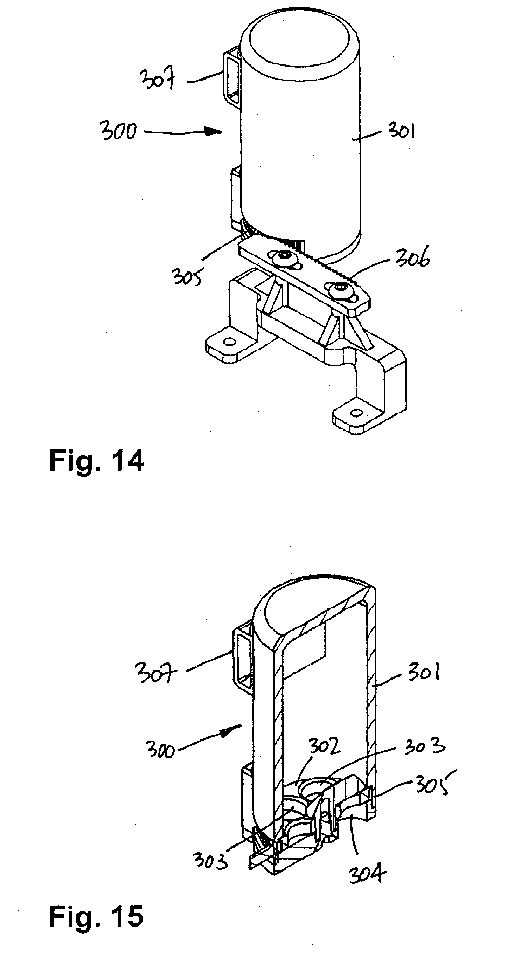

Referring concurrently to Figs. 14 and 15, a bulk dispenser device in accordance with another embodiment of the present application is generally shown at 300. The bulk dispenser device 300 has a cylindrical body 301 that forms a recipient for receiving various tablets. A wheel 302 is positioned in a bottom of the cylindrical body 301 and has a plurality of openings 303, each sized so as to receive a tablet. Accordingly, the wheel 302 is selected as a function of the dimensions of the tablets that the bulk dispenser device 300 will accommodate.

An outlet 304 is provided at a bottom of the cylindrical body 301, and is aligned with the openings 303 in the wheel 302. Therefore, the rotation of the wheel 302 will have the openings 303 align with the outlet 304 one after the other.

In order to actuate the rotation of the wheel 302, a gear periphery 305 is provided on the wheel 302. Therefore, as illustrated in Fig. 14, a translation of the bulk dispenser device 300 along a rack 306 will cause a rotation of the wheel 302 by interaction between the rack 306 and the gear periphery 305. A hook 307 is provided on a periphery of the cylindrical body 301, so as to allow the manipulation of the bulk dispenser device 300 by the grasping tool 41.

In order to restock the dispensing system 10, an operator is required to prepare the various cassettes 25 and record the contents of the cassettes 25 in the controller unit of the dispensing system 10. It is also considered to enter contents data using remote computers, wireless transmission, etc. More specifically, information such as the position on the cassette 25 of the various items (e.g., medication, medical devices, bulk dispenser devices) is entered into the dispensing system 10, as well as the identification of the shelve 36 of the restocking volume 35 in which the cassette 25 is inserted.

Once the stocking of the restocking volume 35 is completed, the front panel 16 is closed. At this point, all manipulations are effected by the robotic arm 40. Therefore, all displacements between the storage volume 30, the restocking volume 35 and the bagging apparatus 50 are controlled, whereby the position of the products on the cassettes 25 is known. Therefore, if a medical device is dispensed by the bagging apparatus, 50, the inventory will note that the cassette 25 that supported the mechanical device has dispensed same, with a confirmation being provided by the optical detector system 110. All transactions are noted, and the inventory is updated in real-time.

In order to return a used medical device or unused medication, it is recommended that these items be returned in their original dispensing pouch. As the pouch typically features a bar code, a reading is taken with the bar-code reader 18, so as to record the dispending of the pouch. A detector in the front panel 16 will confirm that the pouch has been thrown away through the access door 20. If the original pouch is not available, the system can output an empty pouch with information printed thereon, such as the original date or the patient or user identification.

The dispensing of products using the dispensing system 10 involves a tight control of authorizations when the dispensing system 10 is used in given industries. For instance, in the dispensing of medical products and medication, the dispensing of products must take into account numerous factors, such as prescriptions, acceptable doses, illegal use of narcotics, contra-indications. On the other hand, it is considered to provide some freedom of access in view of emergencies.

In one example, the user of the dispensing system 10 must first identify himself/herself in order to perform transactions/place orders with the dispensing system 10. The various user interfaces of the dispensing system 10 described above are used for the identification. After authorization has been granted by the controller unit of the dispensing system 10, the user enters patient and prescription information. The controller unit may address messages to the user via the monitor 17. Otherwise, the controller unit drives the various components so as to prepare the prescription and dispense the prescribed products through the outlet of the dispensing system 10.

In another example, the controller unit may allow temporary orders of medication if authorized personnel can provide enough information to identify a patient (e.g., manual entries), or if the controller unit has not yet been provided with a patient profile or a prescription. In such cases, the authorized personnel would be identified as operator for the dispensing of a product with partial authorization, and the entered information would be printed on the pouch or tube, as well as any other indication provided by prescribing personnel (e.g., physician). It is however important to provide relevant information pertaining to the product, such as contra-indications. The controller unit takes into account such transactions in a patient profile, or for subsequent reconciliation with a main server when prescription data is uploaded to the controller unit. Any improper dispensing identified during reconciliation will be signaled.

Moreover, a patient profile may exist in the controller unit while a prescription has not yet been uploaded to the controller unit. In such a case, authorized personnel may be able to temporarily prescribe medication, but has access to the patient profile to identify allergies and other potential problems for the patient.

The controller unit may alarm maintenance personnel of low levels of inventory for specific products. Moreover, a plurality of dispensing systems 10 may be interconnected via network to share information. If one of the dispensing systems 10 runs out of an item, the user may be informed of other dispensing systems 10 of the network having the item in stock.

In addition to medical uses, the dispensing system 10 may be used to distribute parts or tools. For instance, in the metal-working industry (machining, milling, welding, etc), tools such as drill bits, nuts and bolts, etc, may be dispensed using the dispensing system 10.

In another embodiment, the controller unit is connected to a bar-code reader or other type of reader (e.g., RFID reader) within the casing 15, and each of the cassettes/trays 25 has corresponding data, such as a bar code or an RFID tag. Moreover, given items and the bulk dispensing devices 200 and 300 may also be provided with the corresponding data. When the trays 25 are inserted in the restocking volume 35, a reading may be taken to initiate the position of the tray 25 and its contents in the casing 15. Moreover, any displacement of trays 25/products or dispensing of products within the casing 15 may be accompanied by a reading of the bar codes to confirm the displacement, and that the correct item(s) is being manipulated accordingly to the given transaction or routine to be accomplished.

## Claims

1. A system (10) for dispensing items comprising:
trays (25) each adapted to support at least one item to be dispensed;
a casing (15) comprising a restocking volume (35) receiving trays with items thereon for subsequent storage, a storage volume (30) for accommodating the trays in storage, an outlet (21) for dispensing any selected one of the items on the trays, and an arm (40) to displace trays at least between the restocking volume and the storage volume, and for displacing items from the trays to the outlet;
at least one user interface; and
a controller unit for receiving an identification of each item in the trays when positioned in the restocking volume, and for monitoring a position of each identified item within the trays in the casing to control the actuation of the arm to dispense items through the outlet as a function of an order entered through the user interface;
**characterized in that** the trays each have a pair of connectors (26) on opposite edges so as to be manipulated by a grasping tool (41) of the arm; the arm displaces the grasping tool along three translational degrees of freedom; the restocking volume and the storage volume each have shelves facing each other in the casing, the system further comprising a transition table in the casing to allow the arm to lay down a bottom of one said tray on top of the transition table for the grasping tool to switch from one said connector to another said connector on a displaced tray to move said displaced tray between the shelves of the restocking volume to the shelves of the storage volume.

2. The system according to claim 1, wherein the restocking volume and the storage volume each have shelves (31, 36) facing each other in the casing, with the restocking volume being accessed through an front panel of the casing for an operator to restock the casing.

3. The system according to claim 1, further comprising a front panel (16) pivotable to provide access to an interior of the casing, with at least one of the user interface being on the front panel.

4. The system according to claim 1, further comprising a bagging apparatus (50, 50') at the outlet in the casing, so as to bag items being dispensed through the outlet.

5. The system according to claim 4, wherein the bagging apparatus has a printer (70) for printing on bags information related to the order of the item being dispensed.

6. The system according to claim 4, wherein the bagging apparatus further comprises sealing and cutting apparatuses (80, 90), to enclose dispensed items in closed pouches.

7. The system according to claim 4, wherein the bagging apparatus comprises a support (101) at the outlet, the support being displaceable vertically in order to support an item being bagged prior to the disposal.

8. The system according to claim 1, further comprising a selectively lockable door (20) at the outlet so as to control access to the outlet.

9. The system according to claim 1, further comprising optical sensors (110) to confirm to the controller unit the dispensing of items for the controller unit to adjust inventory data.

10. The system according to claim 1, further comprising a disposal bin, the disposal bin having a drop opening selectively opened through the controller unit to return items in the system.

11. The system according to claim 1, further comprising a bulk dispenser (200) in any one of the trays, the bulk dispenser being actuatable to output at least one item from a bulk container of items.

12. The system according to claim 1, further comprising a reader (18) in the casing and readable data on the trays, for the controller unit to confirm an identity of each tray displaced in the casing.

## Patentansprüche

1. System (10) zum Ausgeben von Artikeln, mit:
Schalen (25), die jeweils dazu geeignet sind, mindestens einen auszugebenden Artikel zu tragen;
einem Gehäuse mit einem Nachfüllvolumen (35) zum Aufnehmen von Schalen mit darauf angeordneten Artikeln zur nachfolgenden Speicherung, ein Speichervolumen (30) zum Aufnehmen der Schalen im Speicher, einem Auslass (21) zum Ausgeben eines ausgewählten Artikels auf den Schalen und einem Arm (40) zum Versetzen der Schalen mindestens zwischen dem Nachfiillvolumen und dem Speichervolumen und zum Versetzen von Artikeln von den Schalen zum Auslass;
mindestens einer Benutzerschnittstelle; und
einer Steuereinheit zum Empfangen einer Identifizierung jedes Artikels in den Schalen, wenn diese im Nachfüllvolumen angeordnet sind, und zum Überwachen einer Position jedes identifizierten Artikels innerhalb der Schalen im Gehäuse zum Steuern der Betätigung des Arms zum Ausgeben von Artikeln durch den Auslass als eine Funktion eines über die Benutzerschnittstelle eingegebenen Befehls;
**dadurch gekennzeichnet, dass**
die Schalen jeweils ein Paar Verbinder (26) an gegenüberliegenden Rändern aufweisen, so dass diese durch ein Greifwerkzeug (41) des Arms manipuliert werden können;
der Arm schwenkt das Greifwerkzeug entlang drei translatorischen Freiheitsgraden;
das Nachfüllvolumen und das Speichervolumen weisen jeweils Regale auf, die im Gehäuse einander zugewandt sind; und
das System weist ferner einen Übergangstisch im Gehäuse, um zu ermöglichen, dass der Arm einen Boden einer der Schalen auf der Oberseite des Übergangstischs ablegen kann, damit das Greifwerkzeug von einem der Verbinder auf einen anderen der Verbinder bei einer versetzten Schale wechselt, um die versetzte Schale zwischen den Regalen des Nachfüllvolumens zu den Regalen des Speichervolumens zu versetzen.

2. System nach Anspruch 1, wobei das Nachfüllvolumen und das Speichervolumen jeweils Regale (31, 36) aufweisen, die im Gehäuse einander zugewandt sind, wobei eine Bedienungsperson über eine Vorderwand des Gehäuses auf das Nachfüllvolumen zugreifen kann, um das Gehäuse nachzufüllen.

3. System nach Anspruch 1, ferner mit einer Vorderwand (16), die schwenkbar ist, um einen Zugriff auf das Innere des Gehäuses zu ermöglichen, wobei mindestens eine Benutzerschnittstelle auf der Vorderwand bereitgestellt wird.

4. System nach Anspruch 1, ferner mit einer Einpackvorrichtung (50, 50') am Auslass des Gehäuses zum Einpacken von Artikeln, die über den Auslass ausgegeben werden.

5. System nach Anspruch 4, wobei die Einpackvorrichtung einen Drucker (70) zum Bedrucken von Tüten mit Information aufweist, die mit dem ausgegebenen Artikel in Beziehung steht.

6. System nach Anspruch 4, wobei die Einpackvorrichtung ferner Verschließ- und Schneidvorrichtungen (80, 90) zum Einschließen der ausgegebenen Artikel in verschlossenen Beuteln aufweist.

7. System nach Anspruch 4, wobei die Einpackvorrichtung eine Halterung (101) am Auslass aufweist, wobei die Halterung vertikal bewegbar ist, um einen einzupackenden Artikel zu halten, bevor er ausgegeben wird.

8. System nach Anspruch 1, ferner mit einer selektiv verriegelbaren Tür (20) am Auslass zum Steuern des Zugriffs auf den Auslass.

9. System nach Anspruch 1, das ferner optische Sensoren (110) aufweist, um der Steuereinheit die Ausgabe von Artikeln zu bestätigen, so dass die Steuereinheit die Bestanddaten anpasst.

10. System nach Anspruch 1, ferner mit einem Abfallbehälter, wobei der Abfallbehälter eine Einwurföffnung aufweist, die durch die Steuereinheit selektiv geöffnet wird, um Artikel in das System zurückzugeben.

11. System nach Anspruch 1, ferner mit einem Schüttgutspender (200) in einer beliebigen der Schalen, wobei der Schüttgutspender betätigbar ist, um mindestens einen Artikel von einem Schüttgutbehälter der Artikel auszugeben.

12. System nach Anspruch 1, ferner mit einem Lesegerät (18) im Gehäuse und mit lesbaren Daten auf den Schalen, um zu veranlassen, dass die Steuereinheit eine Kennzeichnung jeder im Gehäuse versetzten Schale bestätigt.

## Revendications

1. Système (10) pour distribuer des articles comprenant :
des plateaux (25), chacun adaptés pour supporter au moins un article à distribuer ;
une caisse (15) comprenant un volume de réapprovisionnement (35) recevant des plateaux avec des articles sur ces derniers pour le stockage consécutif, un volume de stockage (30) pour loger les plateaux en stockage, une sortie (21) pour distribuer l'un quelconque des articles sélectionnés parmi les articles sur les plateaux, et un bras (40) pour déplacer des plateaux au moins entre le volume de réapprovisionnement et le volume de stockage, et pour déplacer des articles des plateaux vers la sortie ;
au moins une interface utilisateur ; et
une unité de commande pour recevoir une identification de chaque article dans les plateaux lorsqu'ils sont positionnés dans le volume de réapprovisionnement, et pour surveiller une position de chaque article identifié à l'intérieur des plateaux dans la caisse afin de commander l'actionnement du bras pour distribuer les articles par la sortie, en fonction d'un ordre entré par l'interface utilisateur ;
**caractérisé en ce que** les plateaux ont chacun une paire de connecteurs (26) sur des bords opposés afin d'être manipulés par un outil de préhension (41) du bras ; le bras déplace l'outil de préhension le long de trois degrés de liberté de translation ; le volume de réapprovisionnement et le volume de stockage ont chacun des étagères se faisant face dans la caisse, le système comprenant en outre une table de transition dans la caisse pour permettre au bras de poser un fond dudit plateau sur le dessus de la table de transition pour que l'outil de préhension fasse passer ledit connecteur à un autre connecteur sur un plateau déplacé pour déplacer ledit plateau déplacé entre les étagères du volume de réapprovisionnement et les étagères du volume de stockage.

2. Système selon la revendication 1, dans lequel le volume de réapprovisionnement et le volume de stockage ont chacun des étagères (31, 36) se faisant face dans la caisse, avec le volume de réapprovisionnement auquel on a accès par un panneau avant de la caisse pour qu'un opérateur réapprovisionne la caisse.

3. Système selon la revendication 1, comprenant en outre un panneau avant (16) pouvant pivoter pour fournir l'accès à un intérieur de la caisse, avec au moins l'une des interfaces utilisateur qui est sur le panneau avant.

4. Système selon la revendication 1, comprenant en outre une ensacheuse (50, 50') à la sortie, dans la caisse, afin d'ensacher des articles qui sont distribuer par la sortie.

5. Système selon la revendication 4, dans lequel l'ensacheuse a une imprimante (70) pour imprimer, sur les sacs, les informations concernant l'ordre de l'article qui est distribué.

6. Système selon la revendication 4, dans lequel l'ensacheuse comprend en outre des appareils de soudage et de découpe (80, 90) pour enfermer des articles distribués dans des sachets fermés.

7. Système selon la revendication 4, dans lequel l'ensacheuse comprend un support (101) à la sortie, le support pouvant être déplacé verticalement afin de supporter un article qui est ensaché avant la mise au rebut.

8. Système selon la revendication 1, comprenant en outre une porte sélectivement verrouillable (20) à la sortie afin de contrôler l'accès à la sortie.

9. Système selon la revendication 1, comprenant en outre des capteurs optiques (110) pour confirmer à l'unité de commande, la distribution des articles pour que l'unité de commande ajuste les données d'inventaire.

10. Système selon la revendication 1, comprenant en outre une benne de mise au rebut, la benne de mise au rebut ayant une ouverture de chute sélectivement ouverte par le biais de l'unité de commande pour ramener les articles dans le système.

11. Système selon la revendication 1, comprenant en outre un distributeur en vrac (200) dans l'un quelconque des plateaux, le distributeur en vrac pouvant être actionné pour transmettre au moins un article d'un conteneur en vrac d'articles.

12. Système selon la revendication 1, comprenant en outre un lecteur (18) dans la caisse et des données lisibles sur le plateau, pour que l'unité de commande confirme une identité de chaque plateau déplacé dans la caisse.
